# EUROPÄISCHE PATENTSCHRIFT

(11) **EP 2 400 139 B1**
(45) Veröffentlichungstag und Bekanntmachung des Hinweises auf die Patenterteilung: **31.08.2016**
(21) Anmeldenummer: 11170279.1
(22) Anmeldetag: 17.06.2011
(51) Int. Cl.: F02M 26/00, F02B 29/04, F28F 9/02

(54) **Wärmetauscher**
Heat exchanger
Echangeur thermique

(30) Priorität: 24.06.2010 DE 102010025031
(43) Veröffentlichungstag der Anmeldung: 28.12.2011
(73) Patentinhaber: Benteler Automobiltechnik GmbH, 33102 Paderborn (DE)
(72) Erfinder: Ilgner, Thomas, 33154 Salzkotten (DE); Roth, Andreas, 34439 Willebadessen (DE); Lempa, Christoph, 33154 Salzkotten (DE)
(74) Vertreter: Griepenstroh, Jörg

(56) Entgegenhaltungen:
- DE-A1- 2 035 947
- DE-A1- 3 212 914
- DE-A1- 3 435 093

## Beschreibung

Die Erfindung betrifft einen Wärmetauscher gemäß den Merkmalen des Oberbegriffs von Patentanspruch 1.

Wärmetauscher dienen beispielsweise der Wärmerückgewinnung oder der Kühlung des für die Rückführung bestimmten Abgasanteils eines Verbrennungsmotors. Durch die Rückführung zur Verbrennungsluft verringert sich insbesondere beim Einsatz von mageren Gemischen in Kombination mit hohen Verbrennungstemperaturen der Anteil an umweltschädlichen Stickoxiden im Abgas.

Das durch den Wärmetauscher herabgekühlte und dem Verbrennungsprozess zugeführte Abgas reduziert den in der Frischluft enthaltenen Luftüberschuss und senkt gleichzeitig die Verbrennungstemperatur, wodurch sich eine deutlich schadstoffärmere Verbrennung einstellt. Das um nicht brennbare Anteile erweiterte Gemisch ermöglicht insbesondere im Teillastbereich des Motors eine Absenkung des spezifischen Kraftstoffverbrauchs.

Innerhalb des Wärmetauschers tritt das Abgas ohne Durchmischung mit einem Kühlfluid in Kontakt, in dessen Folge eine zwischen den beiden Fluiden bestehende Temperaturdifferenz ausgetauscht wird. Der Leistungsgrad des Wärmetauschers bestimmt sich durch die zum Temperaturaustausch zur Verfügung stehende Fläche. Um die Austauschfläche trotz kleiner äußerer Abmessungen möglichst groß zu gestalten, werden innerhalb des Wärmetauschers beispielsweise eine Vielzahl an Abgas führenden Rohren angeordnet, welche umfangsseitig durch das Kühlfluid umströmt werden.

Der Aufbau sieht hierfür ein Grundrohr vor, welches jeweils endseitig mit einem Rohrboden verbunden ist. Die das Abgas führenden Rohre innerhalb des Grundrohrs sind zu einem Rohrbündel zusammengefasst, welches sich innerhalb des Grundrohrs zwischen den sich gegenüberliegenden Rohrböden erstreckt und mit diesen verbunden ist. Das mit den Rohrböden verbundene Grundrohr bildet hierbei eine durch das Kühlfluid durchströmbare Kammer, welche über das Rohrbündel von dem Abgas passiert wird.

Zur Verhinderung eines nicht bestimmungsgemäßen Austritts des Abgases sowie dessen Durchmischung mit dem Kühlfluid sind die einzelnen Komponenten zu einem in sich und nach außen hin dichten Wärmetauscher verbunden.

Um den Wärmetauscher in seiner Einbaulage zu fixieren, ist um das Grundrohr herum ein Ring angeordnet, über den eine Kopplung mit benachbarten Bauteilen erfolgt. Der Ring selbst ist spanabhebend aus einem Vollmaterial gefertigt. Die massive Bauform bewirkt ein entsprechend hohes Gewicht sowie einen erhöhten Bearbeitungsaufwand.

Vor dem Hintergrund einer wirtschaftlichen Fertigung und dem ökologischen Erfordernis nach reduzierten Verbrauchswerten lassen insbesondere der hohe Materialeinsatz sowie das daraus resultierende Bauteilgewicht eines solchen Rings noch Raum für Verbesserungen.

Die DE 32 12 914 A1 offenbart einen Rohrbündelwärmetauscher, insbesondere zur Verwendung als Verdampfer oder Verflüssiger in einer Wärmepumpe, bei welcher jeder Rohrboden einen seinen Rand umgebenden, in Richtung des Abschlussdeckels weisenden Kragen aufweist, der mit dem Deckelrand unlösbar und gasdicht verbunden ist. Das Mantelrohr ist an seinem Ende mit einer Aufbördelung versehen, die als Anlage eines den Kragen umgebenden Dichtringes dient, welcher durch eine Spann-Klemmschelle fixiert ist.

Aus der EP 1 647 754 A2 ist eine Verbindung zwischen zwei Rohren unter Verwendung eines Dichtringes bekannt. Das erste Rohrende hat einen Flansch, der außerhalb der Wand des ersten Rohrendes angeordnet ist. Der umlaufende Flansch kann über einen Klemmring gegen ein Flanschbauteil des anderen Rohres gedrückt werden. Der Flansch besitzt zwei Schenkel, von denen einer mit einer randseitigen Ausstellung fest mit dem ersten Rohrende verbunden ist und der zweite gleitend auf dem Rohrende gelagert ist. Hierzu ist an dem Rohrende eine Schrägfläche ausgebildet, auf welcher sich ein gerundeter Abschnitt des Flanschbauteils abstützt.

Die US 7,399,005 B2 offenbart ein Verbindungssystem zur dichten Verbindung zweier Rohre unter Verwendung eines Spannringes, bei welchem zur Abdichtung im Kontaktbereich ein gesondertes Dichtelement angeordnet ist. Im Unterschied hierzu wird in der JP 10096493 A ein System zur Verbindung zweier Rohre vorgeschlagen, bei welchem auf einen Dichtkörper verzichet werden soll. Die zu verbindenden Rohrenden werden über einen Klemmring gegeneinander gepresst.

Die DE 34 35 093 A1 weist einen Wärmetauscher für einen Verbrennungsmotor auf, welcher ein Mantelrohr und endseitige Deckel aufweist. Sowohl das Mantelrohr als auch die Deckel weisen an ihren gegenüberliegenden Enden nach außen gerichtete abgewinkelte Ränder auf, welche durch einen Dichtungsring voneinander beabstandet sind. Umfangsseitig werden die abgewinkelten Ränder von einer Spannschelle mit einem angeschweißten Bügel umgriffen, über welche der Wärmetauscher zu befestigen ist.

Der vorliegenden Erfindung liegt die Aufgabe zugrunde, einen zur Kopplung eines Wärmetauschers mit benachbarten Bauteilen um dessen Grundrohr herum angeordneten Ring dahingehend zu verbessern, dass dieser ein reduziertes Bauteilgewicht aufweist und insgesamt wirtschaftlicher herzustellen ist.

Die Lösung dieser Aufgabe besteht nach der Erfindung in einem Wärmetauscher gemäß den Merkmalen nach Anspruch 1.

Die Erfindung sieht einen Wärmetauscher für einen Verbrennungsmotors vor. Der Wärmetauscher weist hierbei ein Grundrohr mit einem umlaufenden Ring auf, wobei das Grundrohr endseitige Rohrböden aufweist.

Der Ring ist aus Blech gefertigt und weist in seinem Querschnitt V-förmig zueinander ausgerichtete Schenkel auf. Die Schenkel sind an einem ihrer jeweiligen Enden über einen Steg miteinander verbunden sind. Der Steg führt zu einer weiteren Beabstandung der Schenkel, wobei die Spitze des V-förmigen Querschnitts abgeflacht ist. Durch den Steg werden die beiden Schenkel zueinander beabstandet, wodurch der Ring seine Kippsicherheit auf dem Grundrohr erhöht. Überdies reduziert der Steg die Bauhöhe gegenüber einer mit Spitze ausgeführten Querschnittsform. Auch wenn die beiden Schenkel unterschiedliche Längen aufweisen können, sind diese bevorzugt identisch ausgebildet. Der Ring ist zwischen den beiden Rohrböden angeordnet. Die Form des Rings folgt der Form des von dem Ring umgebenden Grundrohrs. Gegenüber einer massiven Ausführung des Rings ergibt sich hierdurch eine leichtere und mit weniger Materialeinsatz zu fertigende Lösung. Je nach Ausführung kann der Ring auch mit wenigstens einem seiner Schenkel flächig auf dem Grundrohr aufliegen.

Die Schenkel weisen jeweils an ihren dem Steg gegenüberliegenden Enden voneinander weg weisende Flansche auf. Die Flansche ermöglichen eine Flächenberührung des Rings mit dem Grundrohr, wodurch eine an das Grundrohr angepasste Querschnittsform des Rings erreicht wird. Überdies erhöht sich das Widerstandsmoment des Rings quer zu seiner Längsachse.

Vorteilhafte Ausgestaltungen des Erfindungsgedankens sind Gegenstand der abhängigen Ansprüche 2 bis 6.

Insbesondere vor dem Hintergrund, dass der Wärmetauscher im Bereich des Rings über ein zusätzliches Bauteil eine Kopplung mit benachbarten Bauteilen erfährt, wird somit eine ausbalancierte Fixierung in Bezug auf die Gewichtsverteilung ermöglicht. Etwaige Längenveränderungen des Wärmetauschers durch thermische Belastungen werden so in annähernd gleichen Teilen zur rechten und linken Seite des Rings hin verlagert, wodurch eine erhöhte Belastung von Anschlussbauteilen nur zu einem Ende des Grundrohrs hin reduziert ist.

In bevorzugter Weise ist der Ring kreisringförmig ausgebildet. Hierdurch wird die Herstellung des Rings erleichtert. Dieser kann beispielsweise durch Rollformen sowohl seine Kreisringform als auch seinen V-förmigen Querschnitt erhalten, der in Form eines gebogenen Strangs an seinen jeweiligen Enden miteinander verbunden ist.

Der Ring ist mit dem Grundrohr stoffschlüssig verbunden. Die stoffschlüssige Verbindung kann hierbei sowohl punktuell als auch über den gesamten Kontaktumfang des Rings mit dem Grundrohr angeordnet sein. Die Verbindung kann beispielsweise durch Kleben oder Schweißen sowie Löten erfolgen.

Im Bereich eines der Rohrböden ist eine Endkappe angeordnet. Die Endkappe weist eine umlaufend nach außen gerichtete Umbördelung auf. Die Umbördelung der Endkappe ist durch ein lösbares Spannelement umgriffen und mit dem Ring verbunden. Dabei ermöglicht der V-förmige Querschnitt des Rings eine Selbstzentrierung gegenüber dem Spannelement. Zwischen der Umbördelung und dem Ring kann ein umlaufendes Dichtelement angeordnet sein.

Die Form der Umbördelung ist im Wesentlichen der Ausbildung der Schenkel des Rings nachempfunden. Über die Umbördelung der Endkappe ergibt sich zum Ring ein umlaufend flächiger Kontakt.

Das Spannelement weist in seinem Querschnitt ebenfalls eine im Wesentlichen V-förmige Ausgestaltung auf, welches einen der Schenkel des Rings und die an dem gegenüberliegenden Schenkel anliegende Umbördelung der Endkappe von deren freien Seite aus umgreift. Das Spannelement weist eine geöffnete Ringform auf, deren beiden Enden über ein lösbares Verbindungselement miteinander verbunden sind. Vorzugsweise ist das lösbare Verbindungselement als Schraube ausgeführt, durch dessen Drehung der Umfang des Spannelements sowohl verkleinert als auch vergrößert werden kann. Der sich bei einer Verkleinerung des Umfangs des Spannelements sowohl über den Ring als auch über die Umbördelung der Endkappe schiebende V-förmige Querschnitt des Spannelements presst diese gegeneinander.

Das Spannelement ist hierbei mit einem benachbarten Bauteil verbunden, so dass der Wärmetauscher über das Spannelement in seiner Lage fixiert ist. Durch das Lösen des Verbindungselements wird das Spannelement geöffnet, woraufhin der Wärmetauscher aus dessen Umgreifung herausgenommen werden kann. Gleichzeitig ist die Verbindung der über den Ring mit dem Grundrohr verbundenen Endkappe mit dem Wärmetauscher aufgehoben. Hierdurch reduziert sich der Arbeitsaufwand bei Austausch oder Wartungsarbeiten, da durch das Lösen des Verbindungselements der Wärmetauscher entfernt und gleichzeitig geöffnet ist.

Ein zwischen dem Ring und der Umbördelung der Endkappe befindliches Dichtelement kann hierbei dauerelastisch oder metallisch sowie in einer Kombination daraus ausgeführt sein. Durch das Drehen des lösbaren Verbindungselements, welches den Umfang des Spannelements verändert, wird das Dichtelement zwischen einem Schenkel des Rings und der Umbördelung der Endkappe zusammengepresst, wodurch sich die Dichtwirkung des Dichtelements erhöht.

Die Erfindung schafft einen Wärmetauscher mit einem einfach aufgebauten und leichten Ring, der wirtschaftlich hergestellt werden kann. Insbesondere die Variante, bei der der Ring eine umlaufende Ausstellung des Grundrohrs ist, kommt ohne zusätzliche Materialien und entsprechende Fertigungsprozesse aus. Durch die mitunter geringe Kontaktfläche zwischen dem Ring und dem Grundrohr reduziert sich die Übertragung der durch das heiße Abgas erzeugten Temperatur des Wärmetauschers auf benachbarte Bauteile. Insgesamt ergeben sich hierbei eine Reduzierung des Bauteilgewichts sowie eine kostengünstigere Herstellungsweise.

Die Erfindung ist nachfolgend anhand eines in den Zeichnungen schematisch dargestellten Ausführungsbeispiels näher erläutert. Es zeigen:
- Figur 1: Einen erfindungsgemäßen Wärmetauscher in zwei Ansichten;
- Figur 2: den erfindungsgemäßen Wärmetauscher aus Figur 1 in einer detailreduzierten Ansicht mit einer zusätzlichen Komponente sowie
- Figur 3: einen erfindungsgemäßen Wärmetauscher gemäß der Darstellungsweise von Figur 2 in einer Variante.

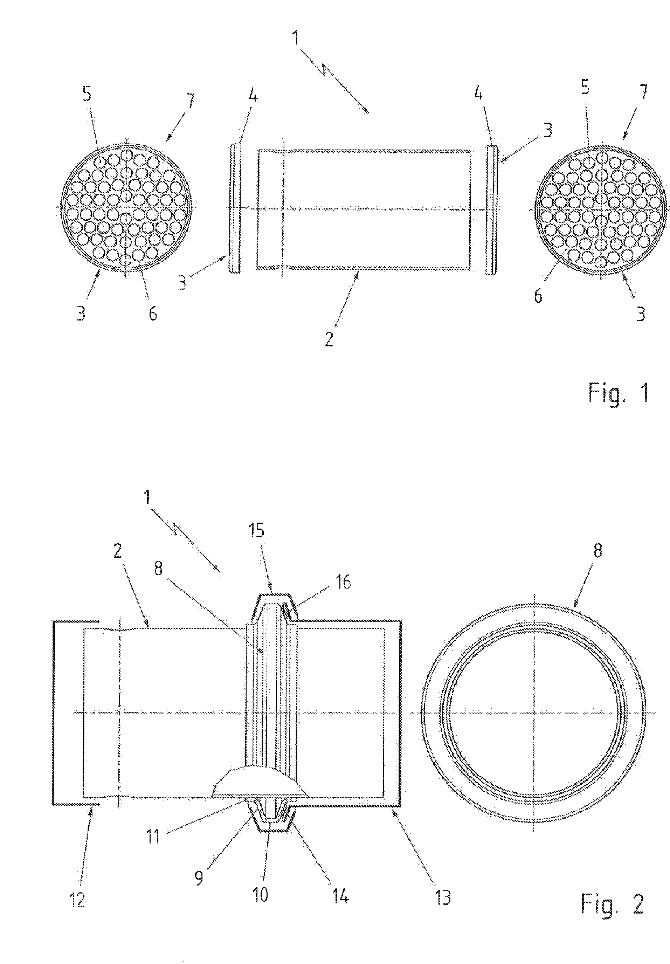

Der in Figur 1 dargestellte Wärmetauscher 1 weist ein Grundrohr 2 mit endseitigen Rohrböden 3 auf. Das in einer Seitenansicht dargestellte Grundrohr 2 weist einen zylindrischen Querschnitt auf, welcher endseitig von den Rohrböden 3 umgriffen ist. Die Rohrböden 3 weisen hierfür einen ihnen gegenüber rechtwinklig abgewinkelten Rand 4 auf, welcher sich jeweils umlaufend um die Rohrböden 3 erstreckt. Der Rand 4 ist so ausgeführt, dass dessen Innenumfang dem Außenumfang des Grundrohrs 2 entspricht, wodurch die Rohrböden 3 mit ihrem jeweiligen Rand 4 formschlüssig auf das Grundrohr 2 aufgesetzt sind.

In der ebenfalls dargestellten Ansicht der Rohrböden 3 ist erkennbar, dass diese eine Vielzahl an Öffnungen 5 aufweisen. Die Öffnungen 5 haben einen kreisrunden Querschnitt. Innerhalb der Öffnungen 5 sind jeweils einzelne Rohre 6 angeordnet, die sich als nicht näher dargestelltes Rohrbündel 7 innerhalb des Grundrohrs 2 zwischen den Rohrböden 3 erstrecken und in den sich gegenüberliegenden Öffnungen 5 der Rohrböden 3 gelagert sind.

Figur 2 zeigt die Seitenansicht des bereits in Figur 1 dargestellten Wärmetauschers 1 in einer detailreduzierten Seitenansicht. Der Wärmetauscher 1 weist hierbei ein das Grundrohr 2 umfangsseitig umlaufenden Ring 8 auf. Der Ring 8 zeigt einen im Wesentlichen V-förmigen Querschnitt. Der Ring 8 erhält seine Querschnittsform durch zwei V-förmig zueinander ausgerichtete Schenkel 9, die am Außenumfang des Rings 8 über einen Steg 10 miteinander verbunden sind. An den dem Steg 10 gegenüberliegenden Enden der Schenkel 9 sind jeweils Flansche 11 angeordnet, die voneinander wegweisen. In einer Ansicht des Rings 8 ist erkennbar, dass dieser kreisringförmig ausgebildet ist. Sowohl die Schenkel 9 als auch die Flansche 11 sind zusammen mit dem Steg 10 aus einem einzelnen Blech geformt. Der Ring 8 weist einen flächigen Kontakt über seine Flansche 11 mit dem Grundrohr 2 auf, wodurch sich der Ring 8 zu seinem Außenumfang hin in Richtung seines Stegs 10 V-förmig verjüngt.

Im Bereich der Rohrböden 3 sind jeweils Endkappen 12, 13 angeordnet, die analog der Rohrböden 3 einen Rand aufweisen. Die Endkappe 13 weist eine umlaufend nach außen gerichtete Umbördelung 14 auf, mit welcher die Endkappe 13 mit einem Schenkel 9 des Rings 8 in Kontakt steht, deren jeweilige Neigungen sich entsprechen. Sowohl die Umbördelung 14 als auch der Ring 8 werden durch ein lösbares Spannelement 15 umlaufend umgriffen. Zwischen dem Ring 8 und der Umbördelung 14 der Endkappe 13 ist ein Dichtelement 16 angeordnet.

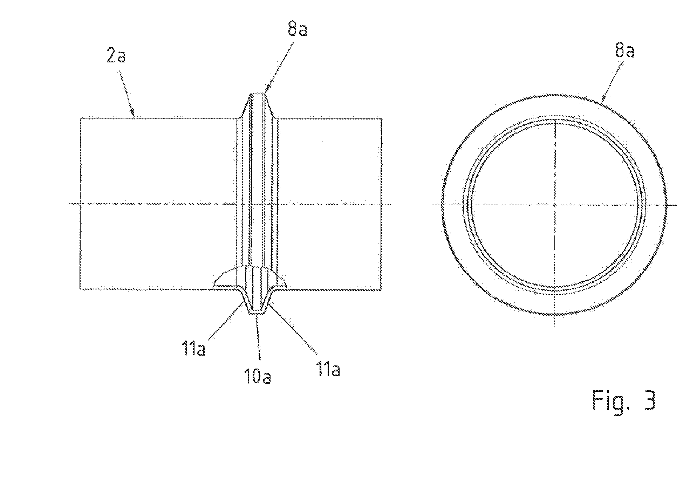

Figur 3 stellt eine Variante des in Figur 2 aufgezeigten Rings 8 mit reduzierten Details dar. Hierbei ist ein Ring 8a aus einem Grundrohr 2a heraus geformt. Der Ring 8a stellt somit eine umlaufende Ausstellung aus der Mantelfläche des Grundrohrs 2a dar. Analog des in Figur 2 dargestellten Rings 8 weist auch der Ring 8a V-förmig zueinander ausgerichtete Schenkel 11a auf, welche am Außenumfang des Rings 8a über einen Steg 10a miteinander verbunden sind. Im Bereich des Rings 8a ist der Innenumfang des Grundrohrs 2a vergrößert, wobei die Wandung des Grundrohrs 2a nach außen gestellt ist.

Im montierten Zustand ist das Spannelement 15 um den Ring 8, 8a geführt, welches direkt oder indirekt beispielsweise mit Bauteilen eines Kraftfahrzeugs verbunden ist. Über das Spannelement 15 wird gleichzeitig eine Verbindung zwischen dem Grundrohr 2 und der Endkappe 13 geschaffen. Die Endkappe 13 weist hierfür die umlaufend nach außen gerichtete Umbördelung 14 auf, die über das Spannelement 15 mit dem Ring 8, 8a verbunden ist. Zwischen dem Ring 8, 8a und der Umbördelung 14 ist die entsprechende Dichtung 16 eingesetzt.

Im Betrieb wird der Wärmetauscher 1 beispielsweise durch ein innerhalb seiner Rohre 6 des Rohrbündels 7 strömendes heißes Abgas durchströmt. Dieses wird durch die Endkappen 12, 13 dem Rohrbündel 7 zugeführt sowie von diesem weggeführt. Über einen Einlass sowie einen Auslass strömt ein Kühlfluid durch die aus dem Grundrohr 2 und den Rohrböden 3 gebildete Kammer, wobei es die einzelnen Rohre 6 umströmt und beispielsweise durch Einbauten umgelenkt wird. Das Kühlfluid dient dem Temperaturaustausch mit dem Abgas und beispielsweise dessen Kühlung. Durch die von den Rohren 6 gebildete große Oberfläche erfolgt ein kontinuierlicher Ausgleich der Temperaturdifferenzen zwischen dem Abgas und dem innerhalb des Wärmetauschers 1 strömenden Kühlfluid.

Da der erfindungsgemäße Wärmetauscher 1 nicht auf die aufgezeigte Ausführungsform sowie den beschriebenen Einsatz beschränkt ist, kann dieser sowohl in Varianten als auch für unterschiedliche Aufgaben eingesetzt werden. Neben der Kühlung eines Fluids dient dieser somit auch grundsätzlich der Wärmerückgewinnung und Erwärmung.

### Bezugszeichen:

- 1 -: Wärmetauscher
- 2 -: Grundrohr
- 2a -: Grundrohr
- 3 -: Rohrboden von 2
- 4 -: Rand von 3
- 5 -: Öffnung von 3
- 6 -: Rohr in 2
- 7 -: Rohrbündel aus 6
- 8 -: Ring
- 8a -: Ring
- 9 -: Schenkel
- 9a -: Schenkel
- 10 -: Steg
- 10a -: Steg
- 11 -: Flansch
- 11a -: Schenkel
- 12 -: Endkappe
- 13 -: Endkappe
- 14 -: Umbördelung von 13
- 15 -: Spannelement
- 16 -: Dichtung

## Patentansprüche

1. Wärmetauscher für einen Verbrennungsmotor, welcher ein Grundrohr (2, 2a) mit einem umlaufenden Ring (8, 8a) und endseitigen Rohrböden (3) aufweist, wobei der Ring (8) aus Blech gefertigt ist und in seinem Querschnitt V-förmig zueinander ausgerichtete Schenkel (9, 11a) aufweist, welche an einem ihrer jeweiligen Enden über einen Steg miteinander verbunden sind, **dadurch gekennzeichnet, dass** der Ring (8) zwischen den endseitigen Rohrböden angeordnet ist und die Schenkel (9, 11a) jeweils an ihren dem Steg (10) gegenüberliegenden Enden voneinander weg weisende Flansche (11) aufweisen, wobei der Ring (8) in seiner Querschnittsform an das Grundrohr (2) angepasst ist und über seine Flansche (11) eine Flächenberührung zu dem Grundrohr (2) aufweist.

2. Wärmetauscher nach Anspruch 1, **dadurch gekennzeichnet, dass** der Ring (8) kreisringförmig ausgebildet ist.

3. Wärmetauscher nach Anspruch 1 oder 2, **dadurch gekennzeichnet, dass** der Ring (8) mit dem Grundrohr (2) stoffschlüssig verbunden ist.

4. Wärmetauscher nach einem der Ansprüche 1 bis 3, **dadurch gekennzeichnet, dass** im Bereich eines der Rohrböden (3) eine Endkappe (13) angeordnet ist.

5. Wärmetauscher nach Anspruch 4, **dadurch gekennzeichnet, dass** die Endkappe (13) eine nach außen gerichtete Umbördelung (14) aufweist.

6. Wärmetauscher nach Anspruch 5, **dadurch gekennzeichnet, dass** ein lösbares Spannelement (15) vorgesehen ist, welches die Umbördelung (14) umgreift.

## Claims

1. Heat exchanger for an internal combustion engine, comprising a base tube (2, 2a), havingan embracing ring (8, 8a), tube plates (3)being provided at the ends of the base tube, wherein the ring (8) is made of sheet metal and in cross-section comprises legs (9, 11a) extending towards each other in a V-shaped manner, the legs (9, 11a) being connected with each other at one end via a bridge, **characterized in that** the ring (8) is positioned between the tube platesprovided at the ends of the base tube,and the legs (9, 11a) comprise, at the end opposite the bridge (10),flanges (11) pointing away from one another, wherein a cross-sectional shape of the ring (8) has a contour which follows the contour of the base tube (2) and contacts the surface of the base tube (2) with the flanges (11).

2. Heat exchanger according to claim 1, **characterized in that** the ring (8) has a circular ring shaped configuration.

3. Heat exchanger according to claim 1 or 2, **characterized in that** the ring (8) is connected to the base tube (2) by a material joint.

4. Heat exchanger according to any of claims 1 to 3, **characterized in that** an end cap (13) is arranged in the region of one of the tube plates (3).

5. Heat exchanger according to claim 4, **characterized in that** the end cap (13) comprises an outwardly directed rim (14).

6. Heat exchanger according to claim 5, **characterized in that** a detachable tension element (15) is provided embracing the rim (14).

## Revendications

1. Echangeur de chaleur pour un moteur à combustion interne, comprenant un tube de base (2, 2a) présentant un anneau périphérique (8, 8a) et des plaques de tube (3) situées à ses extrémités, dans lequel l'anneau (8) est fabriqué en métal et présente des pieds (9, 11a) s'étendant l'un vers l'autre en adoptant une forme en V, dans lequel leurs extrémités respectives sont reliées l'une à l'autre par un pont, **caractérisé en ce que** l'anneau (8) est agencé entre les plaques de tube situées aux extrémités et les pieds (9, 11a) présentent respectivement des extrémités, distantes du pont (10), ayant des brides (11) s'étendant à l'opposé l'une de l'autre, dans lequel l'anneau (8) est adapté, suivant une coupe transversale, au tube de base (2) et présente, au-dessus de ses brides (11), une surface de contact.

2. Echangeur de chaleur selon la revendication 1, **caractérisé en ce que** l'anneau (8) est configuré de forme circulaire.

3. Echangeur de chaleur selon l'une des revendications 1 ou 2, **caractérisé en ce que** l'anneau (8) est relié avec le tube de base (2) par matière.

4. Echangeur de chaleur selon l'une des revendications 1 à 3, **caractérisé en ce qu'**il comprend un embout de fermeture (13) disposé dans une région d'une des plaques de tube (3).

5. Echangeur de chaleur selon la revendication 4, **caractérisé en ce que** l'embout de fermeture (13) présente un bord (14) orienté vers l'extérieur.

6. Echangeur de chaleur selon la revendication 5, **caractérisé en ce qu'**il comprend un élément de tension (15) amovible qui entoure le bord (14).
